# FASCICULE DE BREVET EUROPEEN

(11) **EP 3 948 305 B1**
(45) Date de publication et mention de la délivrance du brevet: **29.04.2026**
(21) Numéro de dépôt: 20706933.7
(22) Date de dépôt: 09.03.2020
(51) Int. Cl.: G01P 3/487, G01D 5/48, G01D 21/02, G01L 9/00, G08C 17/02, G01C 22/00, H04Q 9/00

(54) **PROCEDE ET SYSTEME DE MESURE D'AU MOINS UN PARAMETRE PHYSIQUE POUR UN VELO**
MESSVERFAHREN UND -SYSTEM MINDESTENS EINES PHYSIKALISCHEN PARAMETERS FÜR EIN FAHRRAD
METHOD AND SYSTEM FOR MEASURING AT LEAST ONE PHYSICAL PARAMETER FOR A BICYCLE

(30) Priorité: 28.03.2019 EP 19165713
(43) Date de publication de la demande: 09.02.2022
(73) Titulaire: The Swatch Group Research and Development Ltd, 2074 Marin (CH)
(72) Inventeur: CASAGRANDE, Arnaud, 2014 Bôle (CH)
(74) Mandataire: ICB SA
(86) Numéro de dépôt international: PCT/EP2020/056163
(87) Numéro de publication internationale: WO 2020/193107

(56) Documents cités:
- DE-A1- 102014 203 142
- DE-A1- 19 838 876
- DE-U1- 20 014 262
- DE-U1- 202012 011 461
- DE-U1- 29 615 910
- US-A- 3 723 966
- US-A1- 2005 156 590
- US-A1- 2010 180 664
- US-A1- 2011 018 526
- US-A1- 2017 115 319
- US-B2- 7 495 549
- US-B2- 9 424 739

## Description

### DOMAINE TECHNIQUE DE L'INVENTION

L'invention concerne un procédé de mesure d'au moins un paramètre physique, tel qu'une vitesse et/ou une distance parcourue par un vélo.

L'invention concerne aussi un système de mesure d'au moins un paramètre physique, tel qu'une vitesse et/ou une distance parcourue par un vélo pour la mise en œuvre du procédé de mesure.

### ETAT DE LA TECHNIQUE

Pour effectuer une mesure d'un paramètre physique, tel qu'une vitesse d'un véhicule ayant par exemple deux roues, il peut être utilisé un tachymètre du type Bluetooth, qui est généralement muni d'une batterie pour son alimentation électrique. Il est aussi connu d'utiliser un dispositif de mesure de vitesse avec au moins un aimant permanent disposé sur une roue du véhicule et un capteur magnétique fixé par exemple sur une fourche du véhicule pour déterminer le passage de l'aimant en regard du capteur lors de la rotation de la roue du véhicule. Il est généralement nécessaire de munir un tel dispositif de mesure de vitesse d'une source d'énergie spécifique, ce qui complique la structure du dispositif à placer sur la roue du véhicule et la manière d'effectuer la mesure de vitesse.

Le brevet US 5,335,188 décrit un dispositif pour gérer et comparer des performances idéales, passées et présentes sur une machine d'exercice, telle qu'un vélo. Pour ce faire, il est prévu au moins un aimant permanent lié à la roue de vélo, et un capteur de mouvement sur la fourche de vélo pour transmettre des signaux de mesure par câble à une unité à microprocesseur disposée sur le guidon de vélo. Une batterie est prévue pour l'alimentation du dispositif. Le capteur de mouvement peut détecter le passage de l'aimant permanent lors de la rotation de la roue. Ce capteur de mouvement agit comme un capteur magnétique pour déterminer la vitesse de rotation de la roue au passage de l'aimant à proximité dudit capteur et en déduire la distance parcourue. Comme précédemment mentionné, il doit être utilisé une source d'énergie, telle qu'une batterie pour le fonctionnement du dispositif de mesure, ce qui complique la structure du dispositif à placer sur le vélo pour effectuer la mesure de vitesse.

La demande de brevet US 2015/0285657 A1 décrit un dispositif de gestion d'activité et d'enregistrement d'un vélo. Il est prévu au moins un aimant disposé sur les rayons d'une roue de vélo, une unité de contrôle montée sur une fourche de vélo, et un smartphone placé sur le guidon du vélo. L'unité de contrôle comprend notamment un capteur à effet Hall pour déterminer le passage de l'aimant lors de la rotation de la roue de vélo, un microprocesseur avec un logiciel propriétaire identique au logiciel du smartphone, une mémoire pour mémoriser toutes les mesures effectuées par le ou les capteurs. Le dispositif permet de mesurer la vitesse du vélo et la distance parcourue. Cependant une source d'énergie doit être prévue pour l'unité de contrôle, ce qui complique la structure du dispositif à placer sur le vélo pour effectuer la mesure de vitesse.

La demande de brevet US 2011/0018526 A1 décrit un dispositif de mesure pour mesurer la vitesse de rotation relative d'un rotor qui tourne par rapport à un stator au niveau d'une roue d'un véhicule. Un générateur d'impulsions inductives, qui est soutenu par le stator, comprend une bobine d'induction dans laquelle une tension électrique, qui représente un signal de mesure de la vitesse de rotation du rotor, est induite par la rotation du rotor. Un aimant permanent est prévu lors du passage de la bobine d'induction. Un dispositif émetteur, alimenté en énergie électrique par la tension induite par le générateur d'impulsions inductives, transmet sans fil au moins un signal de mesure de la vitesse de rotation à un dispositif récepteur. Aucun agencement précis d'un capteur magnétique et d'un aimant permanent monté sur un vélo pour la mesure d'une vitesse et d'une distance parcourue n'est décrit.

La demande de brevet US 2005/0156590 A1 décrit un dispositif de mesure pour mesurer le passage d'un aimant fixé sur un rayon d'une roue de vélo en regard d'un circuit de mesure à capteur magnétique fixé sur la fourche du vélo à une même distance de l'axe de rotation de la roue que l'aimant placé sur le rayon. Cependant il n'est pas défini précisément des calculs dans une unité de traitement cadencée par un oscillateur précis à faible consommation.

La demande de brevet DE 296 15 910 U1 décrit un équipement de sport. Il peut s'agir d'un tachymètre avec odomètre sur un vélo pour indiquer la distance parcourue et la vitesse instantanée. Cependant, il est principalement décrit une détection de vitesse pour des patins à roulettes, qui comprennent des aimants sur chaque roue et un capteur qui détecte leur passage afin de transmettre les données de mesure à un récepteur d'un dispositif d'affichage dans lequel il est calculé notamment la vitesse.

La demande de brevet DE 200 14 262 U1 décrit un capteur de vitesse de rotation et de température autonome en énergie, qui comprend un capteur de vitesse de rotation inductif, un capteur de température à semi-conducteur, un régulateur, un accumulateur d'énergie, un gestionnaire associé et un émetteur radio. Les impulsions de tension du capteur de vitesse de rotation sont rectifiées et amplifiées afin qu'un contrôleur puisse évaluer les impulsions pour mesurer la vitesse de rotation. Les impulsions de vitesse de rotation rectifiées sont stockées cumulativement dans un accumulateur d'énergie constituée de condensateurs. Rien ne concerne une mesure de vitesse ou distance parcourue par un vélo.

Le brevet US 9,424,739 B2 décrit un système sans fil auto alimenté. Un aimant interagit avec une inductance pour générer un signal de déclenchement et d'alimentation. Une transmission d'un signal de mesure peut être effectuée. Ce dispositif peut être monté sur un véhicule, mais rien n'est indiqué d'un tel agencement sur un vélo avec un aimant et avec circuit de mesure disposé sur le vélo au niveau d'une roue.

La demande de brevet DE 20 2012 011 461 U1 décrit un dispositif électronique de détection de vitesse et de kilométrage d'un vélo en utilisant au moins un aimant permanent disposé sur un rayon d'une roue et un circuit capteur, tel qu'un générateur de Hall disposé sur un cadre du vélo. Le circuit capteur détecte le passage de l'aimant permanent et prélève une tension d'alimentation pour le dispositif électronique. Un calcul de la distance parcourue et de la vitesse moyenne peut être effectué. Une unité de transmission de données est prévue pour la transmission de données à au moins un récepteur. Le circuit capteur n'est pas adapté pour déterminer facilement plusieurs grandeurs ou paramètres physiques par une simple alimentation électrique suite au passage de l'aimant permanent lors de la rotation de la roue du vélo.

La demande de brevet DE 198 38 876 A1 décrit un tachymètre électronique, qui est alimenté électriquement par le passage d'un aimant devant une bobine d'induction. La tension fournie par la bobine d'induction permet de charger un condensateur de stockage d'énergie par un circuit de redressement et de stabilisation de tension. La bobine d'induction peut détecter les variations de tensions induites au passage de plusieurs aimants permanents et en tant que capteur de rotation. Une vitesse d'une roue peut être déterminée, et une transmission de données peut être effectuée par liaison radio vers une unité d'évaluation. Rien n'est fait référence à un vélo.

La demande de brevet US 2010/0180664 A1 décrit un transducteur rotatif et un procédé de surveillance de l'usure du transducteur. Le transducteur rotatif possède un dispositif détecteur ayant un capteur de mesure pour générer un signal de mesure représentatif de la position angulaire et de la vitesse d'un objet connecté au transducteur rotatif. Un dispositif de surveillance est connecté au capteur de mesure pour transmettre des données et pour émettre un signal d'état d'usure du transducteur rotatif, sur la base du signal de mesure. Rien n'est fait référence à un vélo.

Le brevet US 7,495,549 B2 et la demande de brevet US 2017/0115319 A1 décrivent un dispositif de gestion d'une activité et d'enregistrement d'un vélo. Le dispositif permet de déterminer une pente et un dénivelé au moyen d'un accéléromètre combiné à un baromètre, mais rien en relation à un circuit de mesure muni d'un inclinomètre disposé au niveau d'une roue d'un vélo.

Le brevet US 3,723,966 A et la demande de brevet DE 10 2014 203142 A1 décrivent un dispositif de détermination de la pression d'un pneu d'une roue d'un véhicule, soit par un capteur de pression alimenté par batterie placé sur la jante de la roue ou par un capteur de pression disposé sur la roue et alimenté par une communication sans fil. Aucune liaison n'est définie avec un circuit de mesure mesurant une vitesse ou distance parcourue par le véhicule.

D'autres paramètres physiques peuvent être mesurés sur un vélo. Il peut s'agir de la mesure de la pression des pneus, de la détection du type de sol, de la température du sol, de l'accélération angulaire par un accéléromètre ou d'autres types de mesure. Dans le cas de la mesure de la pression des pneus, il peut être prévu un circuit capteur de pression placé sur la jante de la roue au niveau du trou de la valve. Ce circuit capteur de pression est alimenté par une batterie et a la possibilité de communiquer sans fil des signaux de mesures effectuées comme le produit Hutchinson Connec'Tires. Cependant il doit être prévu une batterie pour l'alimentation d'un tel circuit capteur, ce qui constitue un inconvénient.

### RESUMÉ DE L'INVENTION

L'invention a donc pour but de pallier les inconvénients cités ci-dessus pour simplifier la mesure d'au moins un paramètre physique, tel qu'une vitesse et/ou une distance parcourue d'un véhicule en fournissant avec un minimum d'énergie électrique l'information par exemple de la vitesse et/ou de la distance parcourue par transmission sans fil à un dispositif portable.

A cet effet, l'invention concerne un procédé de mesure d'au moins un paramètre physique d'un véhicule à au moins une roue, qui comprend les caractéristiques des revendications indépendantes 1 et 2.

Des étapes particulières du procédé de mesure sont définies dans les revendications dépendantes 3 à 14.

Un avantage du procédé de mesure selon l'invention réside dans le fait qu' un aimant permanent est monté sur un cadre ou une fourche du véhicule, tel qu'un vélo, et qu'un circuit de mesure à capteur magnétique est disposé sur une roue, par exemple sur un rayon d'une roue de vélo ou sur la jante, pour que le capteur magnétique du circuit de mesure puisse passer à proximité de l'aimant lors de la rotation de la roue. Ainsi, une récupération d'énergie, lors du passage du capteur magnétique du circuit de mesure devant l'aimant, est effectuée dans le circuit de mesure avec un redresseur et un condensateur de lissage. L'énergie récupérée permet d'alimenter les composants électroniques du circuit de mesure.

A chaque détection du passage du capteur magnétique devant l'aimant, une mesure de la vitesse du véhicule, tel qu'un vélo, peut être facilement effectuée dans une unité de calcul du circuit de mesure, cadencée par un oscillateur à quartz horloger fonctionnant à basse tension. Une transmission directe par un signal radiofréquence, par exemple Bluetooth (BLE), de la mesure effectuée peut être faite depuis le circuit de mesure pour être reçue par un dispositif portable porté par l'utilisateur du véhicule ou disposé sur le guidon du véhicule. Ce dispositif portable peut être un téléphone portable ou une oreillette pour fournir un signal audio à l'utilisateur ou une tablette électronique placée sur le guidon afin d'afficher au moins la vitesse du vélo, et une distance parcourue par intégration de la mesure de vitesse.

Selon l'invention, le circuit de mesure comprend au moins deux capteurs magnétiques d'un circuit de mesure disposés par exemple chacun sur un rayon respectif de la roue avant du vélo et, selon l'invention, du même côté de la roue ou de la jante et à 180° l'un de l'autre ou sur la jante de la roue. Cela permet de récupérer plus d'énergie déjà lors d'une rotation complète de la roue de vélo et permettre la mesure de vitesse et/ou de distance parcourue par le vélo. Une calibration du diamètre de la roue de vélo et de l'angle de fixation du circuit de mesure peut être effectuée initialement par une transmission depuis le dispositif portable vers le circuit de mesure. Une mémorisation de ces données dans le circuit de mesure permet lors de la mise en fonction du système de mesure de mesurer la vitesse du vélo au moins après un tour complet de la roue de vélo, et par la suite la distance parcourue.

Alternativement, l'ensemble des calculs et des calibrations peut être opéré et stocké dans le dispositif portable. Dans ce cas de figure, le ou les circuits de mesure sont encore avantageusement simplifiés et ne transmettent que les impulsions de passage de roue dans le temps, et le total de ces impulsions, et éventuellement l'angle brut d'inclinaison du capteur. La calibration est prise en charge par le dispositif portable en roulant par exemple sur un parcours mesuré ou en entrant des valeurs d'inclinaison et de diamètre mesurées.

Au moyen du ou des circuits de mesure, il est possible par la succession d'impulsions de tension induite dans le temps, fournie par chaque capteur magnétique, de calculer une vitesse instantanée, une vitesse maximale sur une période de temps déterminée et une vitesse moyenne dans l'unité de calcul. De plus par intégration dans l'unité de calcul, il peut facilement être déterminé la distance parcourue pendant une période de temps déterminée. Toutes les mesures peuvent être mémorisées pour pouvoir être transmises sur requête et en fonction du niveau de tension d'alimentation du circuit de mesure suite à la récupération d'énergie du passage du ou des capteurs magnétiques en regard du ou des aimants permanents.

D'autres paramètres peuvent être mesurés et transmis sans fil par le ou les circuits de mesure à un dispositif portable sur la base de l'énergie extraite au passage en regard du ou des aimants permanents. Il peut s'agir de la mesure de pression des pneus d'un circuit à capteur de pression avec une alimentation électrique par le circuit de mesure à capteur magnétique.

Avantageusement, le circuit de mesure est monté sur le pneu ou sur la jante de la roue avant, voire de la roue arrière si l'aimant permanent est monté sur une portion arrière du cadre. L'antenne embarquée sur le pneu ou la jante devient tournante. Ceci permet, par synchronisation avec la position physique donnée par la position de l'aimant, également de fournir des informations mesurables au travers des propriétés de propagation du milieu RF. Il peut s'agir de la vitesse Doppler, de mesures de radar à synthèse d'ouverture SAR (Synthetic Aperture Radar en terminologie anglaise).

A cet effet, l'invention concerne également un système de mesure d'au moins un paramètre physique d'un véhicule à au moins une roue, tel qu'un vélo pour la mise en œuvre du procédé de mesure, qui comprend les caractéristiques mentionnées dans la revendication indépendante 15.

Des formes d'exécution particulières du système de mesure sont définies dans les revendications dépendantes 16 à 18.

### BRÈVE DESCRIPTION DES FIGURES

Les buts, avantages et caractéristiques d'un procédé et système de mesure d'au moins un paramètre physique d'un véhicule à au moins une roue, apparaîtront mieux dans la description suivante sur la base d'au moins une forme d'exécution non limitative illustrée par les dessins sur lesquels :
- la figure 1 est une vue de côté d'un véhicule par exemple à deux roues, tel qu'un vélo muni du système de mesure d'au moins un paramètre physique du vélo selon l'invention,
- la figure 2 est une vue de dessus d'un véhicule par exemple à deux roues, tel qu'un vélo muni d'une variante de réalisation du système de mesure d'au moins un paramètre physique du vélo selon l'invention, et
- la figure 3 représente un schéma bloc simplifié des composants électroniques du système de mesure d'au moins un paramètre physique d'un véhicule à au moins une roue selon l'invention.

### DESCRIPTION DETAILLEE DE L'INVENTION

Dans la description suivante, il est fait référence à un procédé et un système de mesure d'au moins un paramètre physique, tel qu'une vitesse et/ou une distance parcourue par un véhicule à au moins une roue, tel qu'un vélo. Tous les composants électroniques, qui sont bien connus d'un homme du métier dans ce domaine technique, ne sont décrits que de manière simplifiée. Le véhicule peut être par exemple un vélo à deux roues de manière à être mis en mouvement par un utilisateur sur un chemin, par exemple sur un chemin routier ou en forêt.

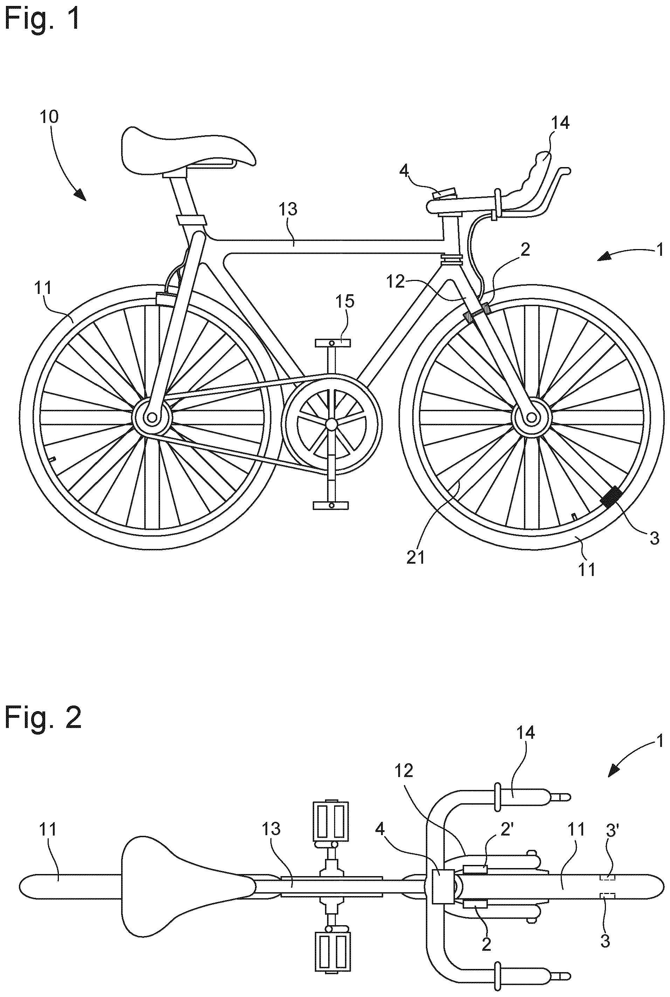

Les figures 1 et 2 représentent une vue de côté et de dessus d'un vélo 10 à deux roues 11. La roue avant 11 est montée libre de rotation à une extrémité d'une fourche avant 12. Cette fourche avant 12 est montée dans une portion avant du cadre 13 de vélo pour pouvoir tourner la roue avant 11 du vélo. La fourche 12 est reliée à une autre extrémité à un guidon 14. Un pédalier 15 actionnable par les deux pieds d'un utilisateur est prévu en liaison avec une chaîne pour entraîner la roue arrière 11 en rotation sur une portion arrière du cadre 13.

Un système de mesure 1 est également monté sur le vélo 10 pour la mesure d'au moins un paramètre physique, tel qu'une vitesse et/ou une distance parcourue du vélo en utilisation. Le système de mesure 1 comprend essentiellement au moins un aimant permanent 2 placé sur une portion arrière du cadre 13 ou sur une fourche avant 12, et au moins un circuit de mesure 3 placé sur une roue 11 avant ou arrière. De préférence, l'aimant permanent 2 est placé sur la fourche avant 12 et un circuit de mesure 3 est monté sur une jante ou pneu de la roue avant 11, voire sur un rayon 21 de la roue avant.

Le système de mesure 1 peut encore comprendre au moins un dispositif portable 4 pour recevoir par exemple des informations de mesure de vitesse et/ou de distance parcourue par le vélo depuis le circuit de mesure 3. De préférence, le circuit de mesure 3 est placé sur un côté de la jante de la roue avant 11. L'aimant permanent 2 est disposé sur la fourche avant 12 à une même distance de l'axe de rotation de la roue avant 11 que le circuit de mesure 3 pour être en regard du circuit de mesure 3 à son passage lors de la rotation de la roue avant 11.

Il peut aussi être prévu de monter au moins deux circuits de mesure 3, 3' placés sur la jante de la roue avant 11 chacun sur un côté opposé de la jante, et deux aimants permanents 2, 2' à une même distance de l'axe de rotation de la roue avant 11. Les aimants permanents 2, 2' sont en regard chacun d'un des circuits de mesure 3, 3' respectifs à leur passage devant les aimants permanents 2, 2'. Les circuits de mesure 3, 3' peuvent être montés à une même position sur deux côtés différents de la jante ou du pneu de la roue avant 11, voire à 180° l'un de l'autre sur deux côtés différents ou sur un même côté avec un seul aimant permanent 2 utile dans ce cas. Il peut aussi être envisagé de placer les circuits de mesure 3, 3' chacun sur un rayon 21 de la roue avant 11.

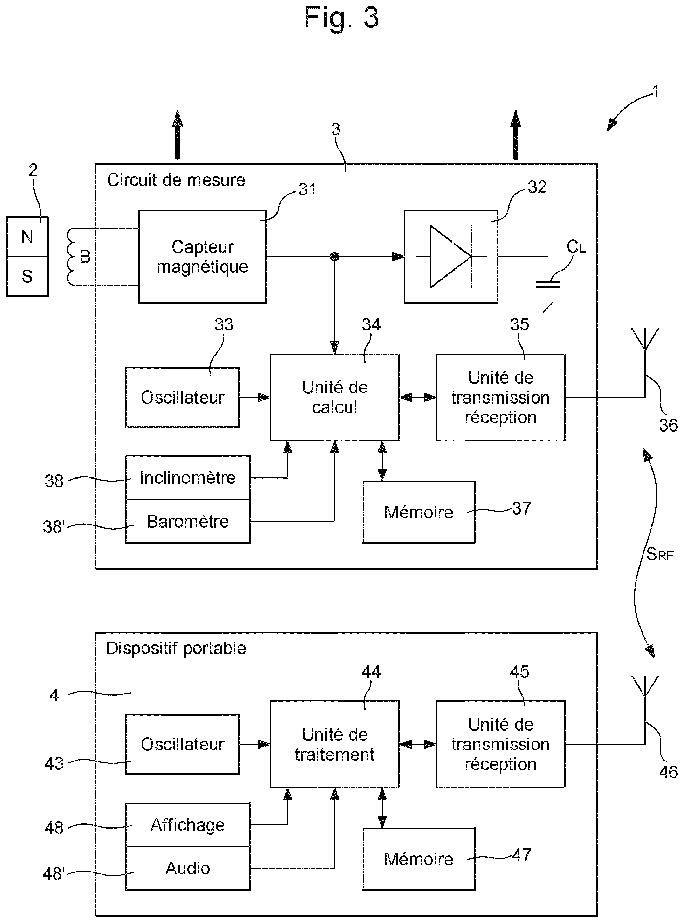

Dans le cas d'un seul circuit de mesure 3 utilisé comme montré en figure 3, ce circuit de mesure 3 comprend principalement un capteur magnétique 31 pour capter son passage devant un aimant permanent 2 notamment par une bobine B, un redresseur à au moins une diode 32 pour redresser la tension induite captée par la bobine B du capteur magnétique 31, et un condensateur de lissage C_{L} pour stocker l'énergie récupérée à la suite du redresseur 32. L'énergie récupérée et stockée sur le condensateur de lissage C_{L} permet de fournir une alimentation électrique aux composants électroniques du circuit de mesure 3.

Le circuit de mesure 3 comprend encore essentiellement une unité de calcul 34 liée directement en sortie du capteur magnétique 31 pour effectuer le calcul d'un paramètre physique, tel que la vitesse et/ou la distance parcourue du vélo en utilisation. L'unité de calcul 34, qui peut être un processeur, est cadencée par un oscillateur 33, qui peut être un oscillateur à quartz horloger ou MEMS. Chaque impulsion magnétique à son passage devant l'aimant permanent 2 à proximité du capteur magnétique 31, et selon une cadence, dans le temps, générée par l'oscillateur 33, permet à l'unité de calcul 34 de calculer facilement la vitesse. De plus, il est possible d'obtenir aussi facilement la distance parcourue par intégration.

Il peut être envisagé de calculer dans l'unité de calcul 34 une vitesse instantanée, une vitesse maximale sur une période de temps déterminée et une vitesse moyenne. Une distance parcourue par le vélo peut aussi être déterminée dans l'unité de calcul 34 sur une période de temps déterminée.

Les mesures effectuées peuvent être transmises par une antenne 36 d'une unité de transmission-réception 35 reliée en sortie de l'unité de calcul 34, à un dispositif portable 4. L'unité de transmission-réception 35 peut être du type BLE en mode annonce ou publicitaire (« advertising » en terminologie anglaise) pour transmettre des signaux radiofréquences S_{RF} à faible distance au dispositif portable 4. Ce dispositif portable 4 peut être un téléphone portable monté sur le guidon du vélo, ou une tablette électronique, voire aussi une oreillette électronique pour signaler les mesures sous forme audio à l'utilisateur.

Dans une variante de réalisation, l'unité de calcul 34 du circuit de mesure 3 peut être prévue pour déterminer des temps de son passage devant l'aimant permanent 2 fixe en regard du capteur magnétique 31 sur la base des impulsions de tension induite fournies par le capteur magnétique 31. Ensuite, l'unité de transmission-réception 35 du circuit de mesure 3 transmet par l'antenne 36 des données relatives aux temps du passage du capteur magnétique 31 devant l'aimant permanent 2 au dispositif portable 4. Un calcul d'une vitesse et/ou d'une distance parcourue du véhicule est effectué directement dans une unité de traitement 44 du dispositif portable 4.

Cette vitesse v du vélo est donc obtenue en connaissant le temps t entre deux pointes de tension induite s'il n'y a qu'un seul capteur magnétique et un seul aimant permanent 2 et la dimension de la roue de vélo avec un diamètre D. Cela donne v = π·D/t. Avec deux circuits de mesure 3, 3' par exemple disposés sur la jante à 180° l'un de l'autre, la vitesse peut être donc v = π·D/(2·t).

Bien entendu, pour le calcul exact de la vitesse du vélo, le diamètre D de la roue avant 11 et éventuellement l'angle d'inclinaison du circuit de mesure 3 avec le capteur magnétique 31 par rapport à l'horizontale doivent être intrinsèquement calibrés par l'utilisateur du vélo notamment par l'intermédiaire du dispositif portable 4 expliqué ci-après.

Comme représenté à la figure 3, il est à noter que le circuit de mesure 3 peut comprendre une mémoire 37 reliée à l'unité de calcul 34 pour mémoriser les mesures de vitesse et de distance parcourue dans le temps. Il peut s'agir d'une mémoire non volatile du type FLASH pour garder en mémoire les données en cas de coupure d'alimentation, notamment quand le vélo est à l'arrêt ou que la tension stockée sur le condensateur de lissage C_{L} n'est plus suffisante.

Le circuit de mesure 3 peut encore comporter d'autres capteurs. Il peut être prévu un inclinomètre 38 pour permettre par intégration de calculer dans l'unité de calcul 34, le dénivelé effectué par le vélo en utilisation, ou une inclinaison latérale instantanée du vélo. L'inclinomètre peut être composé d'un accéléromètre dans le circuit de mesure 3. L'accéléromètre fournit un signal de mesure de forme sinusoïdale lors de la rotation de la roue avec un maximum d'accélération au passage de la verticale au point le plus haut et le minimum au point le plus bas au contact du chemin. Le capteur magnétique 31 du circuit de mesure 3 détecte le passage de l'aimant 2 en décalage des valeurs max et min du signal de mesure de l'accéléromètre. La mesure du temps de passage du capteur magnétique 31 en regard de l'aimant permanent 2 permet de calculer le dénivelé effectué par le vélo en utilisation, ou une inclinaison latérale instantanée du vélo par rapport au sol.

Les données mesurées du dénivelé positif et du dénivelé négatif sont mémorisées dans la mémoire non volatile 37, tout comme la vitesse et la distance parcourue.

Le système de mesure 1 peut encore comprendre un circuit à capteur de pression non représenté disposé au niveau d'une valve du pneu sur la jante de roue pour mesurer la pression du pneu. L'alimentation électrique peut être fournie par le circuit de mesure 3 par une communication sans fil et la mesure de pression du circuit à capteur de pression est transmise au circuit de mesure 3. Cette mesure de pression peut être mémorisée dans le circuit de mesure 3 ou également transmise au dispositif portable 4.

Une détection du type de sol peut être déterminée par le système de mesure 1. Il peut être prévu un capteur de température du circuit de mesure 3 pour mesurer la température du sol, un accéléromètre pour mesurer l'accélération angulaire.

Grâce au circuit de mesure 3 monté sur le pneu ou sur la jante de la roue avant du vélo, voire de la roue arrière du vélo, il peut être effectué une synchronisation avec la position physique donnée par la position de l'aimant 2. Ainsi cela permet de fournir aussi des informations mesurables au travers des propriétés de propagation du milieu RF. Il peut s'agir de la vitesse Doppler, de mesures de radar à synthèse d'ouverture SAR (Synthetic Aperture Radar en terminologie anglaise).

Quand le vélo s'arrête ou roule à trop faible vitesse, il est prévu de désactiver l'unité de transmission-réception 35 si la tension d'alimentation depuis le condensateur de lissage C_{L} descend en dessous d'un premier seuil de tension. Lorsque cette tension d'alimentation descend encore plus bas au-dessous d'un second seuil critique de tension, tout le circuit de mesure 3 est désactivé en ayant mémorisé au préalable toutes les données de mesure dans la mémoire non volatile 37. Ainsi, ces données mémorisées peuvent être à nouveau disponibles pour être transmises au dispositif portable 4 lorsque la tension d'alimentation est suffisante au-dessus du premier seuil bas de tension avec le vélo en utilisation.

Bien entendu pour avoir une tension suffisante de fonctionnement de tout le circuit de mesure 3 même avec une faible vitesse, cela dépend du dimensionnement de la bobine B du capteur magnétique 31 avec un nombre de spires déterminé et de la force du champ magnétique généré par le ou les aimants permanents 2. La distance entre le ou les aimants permanents 2 au passage du capteur magnétique 31 doit être la plus faible possible. Avec un circuit de mesure 3 et un aimant permanent 2, il peut suffire d'une vitesse du vélo juste supérieure par exemple à 2 km/h pour un stockage d'énergie adéquat sur le condensateur de lissage C_{L}.

Le dispositif portable 4 peut être comme expliqué ci-dessus, un téléphone portable porté par l'utilisateur du vélo ou fixé sur une portion du vélo par exemple sur le guidon du vélo. Il peut s'agir aussi d'une tablette électronique aussi fixée sur le guidon du vélo, ou une oreillette électronique portée à l'oreille par l'utilisateur pour signaler les mesures de vitesse et de distance parcourue par un signal audio.

Le dispositif portable 4 comprend une unité de transmission-réception 45 pour établir une communication de signaux S_{RF} par une antenne 46 avec le circuit de mesure 3. Le dispositif portable 4 comprend encore un oscillateur 43, qui peut aussi être un oscillateur à quartz horloger ou autre, pour cadencer une unité de traitement de données 44 reliée à l'unité de transmission-réception 45. Une mémoire non volatile 47 permet de mémoriser les informations de mesures reçues du circuit de mesure ou calculées dans le dispositif portable 4, et de fournir des données de paramétrage ou de calibration à l'unité de traitement pour une transmission au circuit de mesure 3 par l'unité de transmission-réception 45. Il peut encore être prévu au moins un élément d'affichage 48 par exemple à cristaux liquides ou LED pour signaler à l'utilisateur la vitesse du vélo et la distance parcourue lors de la réception des signaux S_{RF} du circuit de mesure 3.

Dans le cas d'un dispositif portable 4 sous la forme d'une oreillette électronique, un élément audio 48' tel qu'un haut-parleur peut être prévu. Il peut donc y avoir aussi bien l'élément audio 48' et l'élément d'affichage 48 pour le dispositif portable 4 sous la forme du téléphone portable ou de la tablette électronique. Ainsi une information de mesures effectuées par le circuit de mesure 3 peut être fournie à l'utilisateur sous forme audio à l'aide d'une synthèse vocale.

Il est encore à noter que comme la distance entre le dispositif portable 4 fixé sur le guidon et le circuit de mesure 3 est faible, il est possible de diminuer fortement la puissance du signal S_{RF} BLE. Cela permet ainsi d'augmenter la durée de fonctionnement du circuit de mesure 3 lorsque le vélo est un moment à l'arrêt.

Le capteur magnétique 31 du circuit de mesure peut n'être constitué de manière simplifiée que par la bobine à plusieurs spires reliées à l'unité de calcul 34. De plus, il peut être prévu deux circuits de mesure 3, 3' montrés en figure 2 positionnés par exemple à une même position sur la roue, mais sur deux côtés différents de la jante ou du pneu de la roue 11. Ces deux circuits de mesure 3, 3' peuvent aussi être disposés à 180° l'un de l'autre d'un même côté ou sur deux côtés différents de la jante ou du pneu de la roue 11. Cela permet d'assurer le bon fonctionnement d'au moins un des deux circuits de mesure 3, 3' à capteur magnétiques pour la mesure précise de la vitesse et de la distance parcourue dans le circuit de mesure 3 ou une autre grandeur physique. Le capteur magnétique 31 peut aussi être un capteur à effet Hall.

A partir de la description qui vient d'être faite, plusieurs variantes de réalisation d'un procédé et système de mesure d'au moins un paramètre physique, tel qu'une vitesse et/ou une distance parcourue par un véhicule à au moins une roue, peuvent être conçues par l'homme du métier sans sortir du cadre de l'invention définie par les revendications. Plusieurs dispositifs portables peuvent être prévus dans le système de mesure. Chaque dispositif portable possède sa propre source d'énergie, telle qu'une batterie ou une cellule solaire ou autre source d'énergie. Les circuits de mesure et l'aimant permanent peuvent aussi être montés du côté de la roue arrière du vélo. Il peut aussi être prévu que l'aimant soit intégré dans la matière du cadre ou de la fourche avant.

## Revendications

1. Procédé de mesure d'au moins une vitesse et/ou une distance parcourue par un vélo (10) lors de son utilisation par un utilisateur, au moyen d'au moins deux circuits de mesure (3, 3'), chaque circuit de mesure comprenant un capteur magnétique (31), les deux circuits de mesure (3, 3') étant disposé sur un même côté de la roue ou de la jante et décalés de 180° l'un de l'autre, et au moyen d'un aimant permanent (2) disposé sur la portion de cadre (13) ou la fourche (12) à une même distance de l'axe de rotation de la roue (11) que chaque circuit de mesure (3, 3') pour être en regard de chaque circuit de mesure (3, 3') à son passage lors de la rotation de la roue (11),
le procédé comprenant des étapes de :
- mettre le vélo (10) en mouvement sur un chemin avec la roue (11) en rotation avec les circuits de mesure (3, 3'),
- détecter le passage du capteur magnétique (31) de chaque circuit de mesure (3, 3') en regard de l'aimant permanent (2) en générant une impulsion de tension induite à chaque passage du circuit de mesure (3, 3') en rotation,
- redresser la tension générée par le capteur magnétique (31) au moyen d'un redresseur (32) et en stockant la tension redressée sur un condensateur de lissage (C_{L}) pour alimenter le circuit de mesure (3, 3'),
- calculer une vitesse et/ou une distance parcourue du vélo (10) dans une unité de calcul (34), qui est cadencée par un oscillateur (33) à quartz horloger de chaque circuit de mesure (3, 3'), sur la base des impulsions de tension induite reçues dans le temps du capteur magnétique (31) en connaissant la valeur du diamètre de la roue (11) du vélo (10), en ce qu'une mémorisation de mesures de vitesse et/ou de distance parcoure obtenue par intégration dans l'unité de calcul (34) des circuits de mesure (3, 3') est effectuée dans une mémoire non volatile (37) de chaque circuit de mesure (3, 3'), et
- transmettre sans fil une ou plusieurs mesures de vitesse et/ou de distance calculées dans l'unité de calcul (34) de chaque circuit de mesure (3, 3') à un dispositif portable (4) porté par l'utilisateur ou sur une partie du vélo (10) par une unité de transmission-réception de signaux (35) liée à une antenne (36) de chaque circuit de mesure (3, 3').

2. Procédé de mesure d'au moins une vitesse et/ou une distance parcourue par un vélo (10) lors de son utilisation par un utilisateur, au moyen d'au moins deux circuits de mesure (3, 3'), chaque circuit de mesure comprenant un capteur magnétique (31), les deux circuits de mesure étant disposés sur un même côté de la roue ou de la jante, les deux circuits de mesure étant décalés de 180° l'un de l'autre, et au moyen d'un aimant permanent (2) disposé sur la portion de cadre (13) ou la fourche (12) à une même distance de l'axe de rotation de la roue (11) que les circuits de mesure (3, 3') pour être en regard de chaque circuit de mesure (3, 3') à son passage lors de la rotation de la roue (11),
le procédé comprenant des étapes de :
- mettre le vélo (10) en mouvement sur un chemin avec la roue (11) en rotation avec les circuits de mesure (3, 3'),
- détecter le passage du capteur magnétique (31) de chaque circuit de mesure (3, 3') en regard de l'aimant permanent (2) en générant une impulsion de tension induite à chaque passage des circuits de mesure (3, 3') en rotation,
- redresser la tension générée par le capteur magnétique (31) au moyen d'un redresseur (32) et en stockant la tension redressée sur un condensateur de lissage (C_{L}) pour alimenter les circuits de mesure (3, 3'),
- déterminer des temps de passage des circuits de mesure (3) à capteur magnétique (31) en regard de l'aimant permanent (2) dans une unité de calcul (34), qui est cadencée par un oscillateur (33) à quartz horloger de chaque circuit de mesure (3, 3'), sur la base d'impulsions de tension induite fournies par le capteur magnétique (31), et
- transmettre sans fil des données relatives aux temps de passage du capteur magnétique (31) en regard de l'aimant permanent (2) à un dispositif portable (4) porté par l'utilisateur ou sur une partie du vélo (10) par une unité de transmission-réception de signaux (35) liée à une antenne (36) des circuits de mesure (3, 3') de manière à calculer dans une unité de traitement (44) du dispositif portable (4) un paramètre physique, tel qu'une vitesse et/ou une distance parcourue du vélo (10), et en ce qu'une mémorisation de mesures de vitesse et/ou de distance parcoure obtenue par intégration dans l'unité de traitement (44) du dispositif portable (4) est effectuée dans une mémoire non volatile (47) du dispositif portable (4).

3. Procédé de mesure selon l'une des revendications 1 et 2, **caractérisé en ce qu'**une distance parcourue par le vélo (10) sur une période de temps déterminée est calculée par intégration dans l'unité de calcul (34) de chaque circuit de mesure (3, 3') ou dans l'unité de traitement (44) du dispositif portable (4), sur la base des impulsions de tension induite reçues dans le temps du capteur magnétique (31), et **en ce que** le dispositif portable (4) est agencé pour afficher une mesure de vitesse instantanée ou des mesures de vitesse et/ou de distance parcourue sur un élément d'affichage (48) du dispositif portable (4), ou pour signaler ces mesures à l'utilisateur par un signal audio par un élément audio (48') du dispositif portable (4).

4. Procédé de mesure selon la revendication 3, **caractérisé en ce qu'**une ou plusieurs mesures de distance parcourue sont transmises sans fil au dispositif portable (4) en même temps que la ou les mesures de vitesse ou indépendamment.

5. Procédé de mesure selon la revendication 1, **caractérisé en ce que** dès qu'une mesure de la vitesse est déterminée dans l'unité de calcul (34), une transmission directe de cette mesure est effectuée à destination du dispositif portable (4) pour afficher cette mesure de vitesse instantanée sur un élément d'affichage (48) du dispositif portable (4), ou pour signaler cette mesure à l'utilisateur par un signal audio par un élément audio (48') du dispositif portable (4).

6. Procédé de mesure selon la revendication 1, **caractérisé en ce qu'**une valeur maximale de vitesse ou une valeur moyenne de vitesse est déterminée dans l'unité de calcul (34) sur une période de temps déterminée et transmise à destination du dispositif portable (4) pour afficher cette valeur maximale ou moyenne de vitesse sur un élément d'affichage (48) du dispositif portable (4), ou pour signaler cette mesure à l'utilisateur par un signal audio par un élément audio (48') du dispositif portable (4).

7. Procédé de mesure selon la revendication 2, **caractérisé en ce qu'**une valeur maximale de vitesse ou une valeur moyenne de vitesse est déterminée dans l'unité de traitement (44) du dispositif portable (4) sur une période de temps déterminée pour afficher cette valeur maximale ou moyenne de vitesse sur un élément d'affichage (48) du dispositif portable (4), ou pour signaler cette mesure à l'utilisateur par un signal audio par un élément audio (48') du dispositif portable (4).

8. Procédé de mesure selon la revendication 1, **caractérisé en ce que** dès que le niveau de tension d'alimentation sur le condensateur de lissage (C_{L}) passe en dessous d'un premier seuil bas de tension d'alimentation, une désactivation de l'unité de transmission-réception de signaux (35) est effectuée.

9. Procédé de mesure selon la revendication 8, **caractérisé en ce qu'**avant que le niveau de tension d'alimentation sur le condensateur de lissage (C_{L}) passe en dessous d'un second seuil de tension d'alimentation inférieur au premier seuil bas, une mémorisation de différents calculs de vitesse et/ou de distance parcourue par le vélo (10) est effectuée dans une mémoire non volatile (37) de chaque circuit de mesure (3, 3').

10. Procédé de mesure selon l'une des revendications 1 et 2, **caractérisé en ce qu'**une mesure de la température du sol est effectuée par un capteur de température de chaque circuit de mesure (3, 3'), et **en ce qu'**une transmission de la mesure de température au dispositif portable (4) est effectuée.

11. Procédé de mesure selon l'une des revendications 1 et 2, **caractérisé en ce qu'**une mesure d'accélération angulaire est effectuée par un accéléromètre de chaque circuit de mesure (3, 3'), et **en ce qu'**une transmission de la mesure d'accélération angulaire au dispositif portable (4) est effectuée.

12. Procédé de mesure selon la revendication 1, **caractérisé en ce qu'**une opération de calibration du diamètre de la roue (11) du vélo (10) et de l'angle de fixation de chaque circuit de mesure (3, 3') est effectuée initialement par une transmission de signaux de paramétrage (S_{RF}) depuis le dispositif portable (4) vers le circuit de mesure (3).

13. Procédé de mesure selon la revendication 2, **caractérisé en ce qu'**une opération de calibration du diamètre de la roue (11) du vélo (10) et de l'angle de fixation de chaque circuit de mesure (3, 3') est effectuée par le dispositif portable (4) sur la base de données brutes transmises par chaque circuit de mesure (3, 3') et de valeurs mesurées en absolu ou sur un parcours calibré.

14. Procédé de mesure selon l'une des revendications 1 et 2, **caractérisé en ce que** chaque circuit de mesure (3, 3') communique par des signaux radiofréquences (S_{RF}) de l'unité de transmission-réception (35) du type BLE en mode publicitaire avec le dispositif portable (4).

15. Vélo (10) comprenant un système (1) de mesure d'une vitesse et/ou d'une distance parcourue par ledit vélo (10), le système de mesure convenant à la mise en œuvre du procédé de mesure selon l'une des revendications précédentes, le système de mesure comprenant au moins deux circuits de mesure (3, 3'), chaque circuit de mesure (3, 3') comprenant un capteur magnétique (31), les circuits de mesure (3, 3') étant disposés sur un même côté de la roue ou de la jante, les deux circuits de mesure étant décalés de 180° l'un de l'autre, et au moyen d'un aimant permanent (2) disposé sur la portion de cadre (13) ou la fourche (12) à une même distance de l'axe de rotation de la roue (11) que les circuits de mesure (3, 3') pour être en regard de chaque circuit de mesure (3, 3') à son passage lors de la rotation de la roue (11), et un dispositif portable (4) agencé pour communiquer sans fil des signaux radiofréquences avec chaque circuit de mesure (3, 3'),
**caractérisé en ce que** chaque circuit de mesure (3, 3') comprend :
- le capteur magnétique (31) destiné à détecter son passage en rotation devant l'aimant permanent (2) et à générer une impulsion de tension induite à chaque passage devant l'aimant permanent (2),
- un redresseur (32) pour redresser la tension générée par le capteur magnétique (31) et un condensateur de lissage (C_{L}) pour stocker la tension redressée pour l'alimentation de chaque circuit de mesure (3, 3'),
- une unité de calcul (34), qui est cadencée par un oscillateur (33) à quartz horloger, étant agencée pour calculer une vitesse et/ou une distance parcourue du vélo (10) sur la base des impulsions de tension induite reçues du capteur magnétique (31) en connaissant la valeur du diamètre de la roue (11) du vélo (10) ou pour déterminer des temps de passage du capteur magnétique (31) en regard de l'aimant permanent (2) sur la base des impulsions de tension induite fournies par le capteur magnétique (31), et
- une unité de transmission-réception (35) liée à une antenne (36) agencée pour transmettre une ou plusieurs mesures de vitesse et/ou distance calculées dans l'unité de calcul (34) à un dispositif portable (4) porté par l'utilisateur ou sur une partie du vélo (10) ou pour transmettre des données relatives aux temps de passage du capteur magnétique (31) en regard de l'aimant permanent (2) au dispositif portable (4) de manière à calculer dans une unité de traitement (44) du dispositif portable (4) une vitesse et/ou une distance parcourue du vélo (10), et
**en ce qu'**une mémorisation de mesures de vitesse et/ou de distance parcourue obtenue par intégration dans l'unité de calcul (34) de chaque circuit de mesure (3, 3') ou dans l'unité de traitement (44) du dispositif portable (4) est effectuée dans une mémoire non volatile (37) du circuit de mesure (3) ou dans une mémoire non volatile (47) du dispositif portable (4).

16. Vélo (10) selon la revendication 15, pour lequel chaque circuit de mesure (3, 3') est placé sur un rayon (21) ou une jante ou un pneu d'une roue avant (11) du vélo (10), et l'aimant permanent (2) est placé sur la fourche avant (12) du vélo, **caractérisé en ce que** le dispositif portable (4) est un téléphone portable ou une tablette électronique pour être porté par l'utilisateur ou fixé sur le guidon du vélo, et **en ce qu'**une ou des mesures effectuées dans chaque circuit de mesure (3) sont transmises par des signaux radiofréquences de type BLE (S_{RF}) au dispositif portable pour être affichées sur un élément d'affichage (48) ou signalées par un signal audio d'un élément audio (48') à un utilisateur du vélo.

17. Vélo (10) selon la revendication 15, **caractérisé en ce que** chaque circuit de mesure (3, 3') comprend un capteur de température pour mesurer la température du sol à transmettre au dispositif portable (4).

18. Vélo (10) selon la revendication 15, **caractérisé en ce que** chaque circuit de mesure (3, 3') comprend un accéléromètre pour une mesure d'accélération angulaire à transmettre au dispositif portable (4).

## Patentansprüche

1. Verfahren zum Messen mindestens einer Geschwindigkeit und/oder einer von einem Fahrrad (10) zurückgelegten Entfernung, wenn es von einem Benutzer verwendet wird, durch mindestens zwei Messschaltungen (3, 3'), wobei jede Messschaltung einen Magnetsensor (31) umfasst, wobei die beiden Messschaltungen (3, 3') an der gleichen Stelle des Rads oder der Felge angeordnet und um 180° versetzt voneinander sind, und durch einen Permanentmagneten (2), der auf dem Teil des Rahmens (13) oder der Gabel (12) in derselben Entfernung von der Drehachse des Rads (11) wie jede Messschaltung (3, 3') so angeordnet ist, dass er jeder Messschaltung (3, 3') zugewandt ist, die, wenn das Rad (11) sich dreht, an ihm vorbeiläuft,
wobei das Verfahren die folgenden Schritte umfasst:
- in Bewegung setzen des Fahrrads (10) auf einem Weg, wobei sich das Rad (11) mit den Messschaltungen (3, 3') dreht,
- Erfassen des Durchlaufs des Magnetsensors (31) auf jeder dem Permanentmagneten (2) zugewandten Messschaltung (3, 3') und Erzeugen einer induzierten Stoßspannung bei jedem Durchlauf der drehbaren Messschaltung (3, 3'),
- Gleichrichten der durch den Magnetsensor (31) erzeugten Spannung durch einen Gleichrichter (32) und Speichern der gleichgerichteten Spannung auf einem Glättungskondensator (C_{L}) zum Speisen der Messschaltung (3, 3'),
- Berechnen einer Geschwindigkeit und/oder einer zurückgelegten Entfernung für das Fahrrad (10) in einer Recheneinheit (34), die von einem horologischen Quarzoszillator (33) auf jeder Messschaltung (3, 3') bemessen wird, basierend auf der von dem Magnetsensor (31) im Zeitablauf empfangenen induzierten Stoßspannung, durch die Kenntnis des Werts für den Durchmesser des Rads (11) des Fahrrads (10), dadurch, dass die Geschwindigkeit und/oder die zurückgelegten Entfernungsmessungen, die durch Integration in die Recheneinheit (34) erhalten werden, in den Messschaltungen (3, 3') in einem nichtflüchtigen Speicher (37) in jeder Messschaltung (3, 3') gespeichert werden, und
- drahtloses Übertragen einer oder mehrerer Messung(en) der Geschwindigkeit und/oder der Entfernung, die in der Recheneinheit (34) in jeder Messschaltung (3, 3') berechnet werden, an eine tragbare Vorrichtung (4), die von dem Benutzer oder an einem Teil des Fahrrads (10) getragen wird, mithilfe einer Signalübertragungsempfangseinheit (35), die mit einer Antenne (36) an der Messschaltung (3, 3') verbunden ist.

2. Verfahren zum Messen mindestens einer Geschwindigkeit und/oder einer von einem Fahrrad (10) zurückgelegten Entfernung, wenn es von einem Benutzer verwendet wird, durch mindestens zwei Messschaltungen (3, 3'), wobei jede Messschaltung einen Magnetsensor (31) umfasst, wobei die beiden Messschaltungen an der gleichen Stelle des Rads oder der Felge angeordnet sind, wobei die beiden Messschaltungen um 180° voneinander versetzt sind, und durch einen Permanentmagneten (2), der auf dem Teil des Rahmens (13) oder der Gabel (12) in derselben Entfernung von der Drehachse des Rads (11) wie die Messschaltungen (3, 3') so angeordnet ist, dass er jeder Messschaltung (3, 3') zugewandt ist, die, wenn das Rad (11) sich dreht, an ihm vorbeiläuft,
wobei das Verfahren die folgenden Schritte umfasst:
- in Bewegung setzen des Fahrrads (10) auf einem Weg, wobei sich das Rad (11) mit den Messschaltungen (3, 3') dreht,
- Erfassen des Durchlaufs des Magnetsensors (31) auf jeder dem Permanentmagneten (2) zugewandten Messschaltung (3, 3') und Erzeugen einer induzierten Stoßspannung bei jedem Durchlauf der drehbaren Messschaltungen (3, 3'),
- Gleichrichten der von dem Magnetsensor (31) erzeugten Spannung durch einen Gleichrichter (32) und Speichern der gleichgerichteten Spannung auf einem Glättungskondensator (C_{L}) zum Speisen der Messschaltungen (3, 3'),
- Bestimmen der Durchlaufzeiten der Messschaltungen (3), wobei die Magnetsensoren (31) dem Permanentmagneten (2) in einer Recheneinheit (34) zugewandt sind, die von einem horologischen Quarzoszillator (33) auf jeder Messschaltung (3, 3') basierend auf der von dem magnetischen Sensor (31) induzierten Stoßspannung bemessen wird, und
- drahtloses Übertragen von Daten bezüglich der Durchlaufzeiten des Magnetsensors (31), der dem Permanentmagneten (2) zugewandt ist, an eine tragbare Vorrichtung (4), die von dem Benutzer oder an einem Teil des Fahrrads (10) getragen wird, mithilfe einer Signalübertragungsempfangseinheit (35), die mit einer Antenne (36) an den Messschaltungen (3, 3') verbunden ist, um Folgendes zu berechnen: in einer Verarbeitungseinheit (44) in der tragbaren Vorrichtung (4), einen physikalischen Parameter, wie z. B. eine Geschwindigkeit und/oder eine von dem Fahrrad (10) zurückgelegte Entfernung, und dadurch, dass die Geschwindigkeit und/oder die zurückgelegten Entfernungsmessungen, die durch Integration in der Verarbeitungseinheit (44) in der tragbaren Vorrichtung (4) erhalten werden, in einem nichtflüchtigen Speicher (47) in jedem tragbaren Gerät (4) gespeichert sind.

3. Messverfahren nach einem der Ansprüche 1 und 2, **dadurch gekennzeichnet, dass** eine von dem Fahrrad (10) über einen bestimmten Zeitraum zurückgelegte Entfernung durch Integration in die Recheneinheit (34) in jeder Messschaltung (3, 3') oder in die Verarbeitungseinheit (44) in der tragbaren Vorrichtung (4), basierend auf der induzierten Stoßspannung, die im Zeitablauf von dem Magnetsensor (31) empfangen wird, berechnet wird, und dass die tragbare Vorrichtung (4) angeordnet ist, um eine aktuelle Geschwindigkeitsmessung oder Geschwindigkeit und/oder zurückgelegte Entfernungsmessungen auf einem Anzeigeelement (48) auf der tragbaren Vorrichtung (4) anzuzeigen oder diese Messungen dem Benutzer durch ein Audiosignal mithilfe eines Audioelements (48') auf der tragbaren Vorrichtung (4) zu signalisieren.

4. Messverfahren nach Anspruch 3, **dadurch gekennzeichnet, dass** gleichzeitig mit der/den Geschwindigkeitsmessung(en) oder getrennt davon eine oder mehrere zurückgelegte Entfernungsmessung(en) drahtlos an die tragbare Vorrichtung (4) übertragen werden.

5. Messverfahren nach Anspruch 1, **dadurch gekennzeichnet, dass** sobald eine Geschwindigkeitsmessung in der Recheneinheit (34) bestimmt wird, diese Messung direkt an die tragbare Vorrichtung (4) übertragen wird, um diese aktuelle Geschwindigkeitsmessung auf einem Anzeigeelement (48) auf der tragbaren Vorrichtung (4) anzuzeigen oder um diese Messung dem Benutzer durch ein Audiosignal mithilfe eines Audioelements (48') auf der tragbaren Vorrichtung (4) zu signalisieren.

6. Messverfahren nach Anspruch 1, **dadurch gekennzeichnet, dass** in der Recheneinheit (34) über einen bestimmten Zeitraum ein maximaler Geschwindigkeitswert oder ein durchschnittlicher Geschwindigkeitswert bestimmt und an die tragbare Vorrichtung (4) übermittelt wird, um diesen maximalen oder durchschnittlichen Geschwindigkeitswert auf einem Anzeigeelement (48) auf der tragbaren Vorrichtung (4) anzuzeigen oder um diese Messung dem Benutzer durch ein Audiosignal mithilfe eines Audioelements (48') auf der tragbaren Vorrichtung (4) zu signalisieren.

7. Messverfahren nach Anspruch 2, **dadurch gekennzeichnet, dass** in der Verarbeitungseinheit (44) in der tragbaren Vorrichtung (4) über einen bestimmten Zeitraum ein maximaler Geschwindigkeitswert oder ein durchschnittlicher Geschwindigkeitswert bestimmt wird, um diesen maximalen oder durchschnittlichen Geschwindigkeitswert auf einem Anzeigeelement (48) auf der tragbaren Vorrichtung (4) anzuzeigen oder um diese Messung dem Benutzer durch ein Audiosignal mithilfe eines Audioelements (48') auf der tragbaren Vorrichtung (4) zu signalisieren.

8. Messverfahren nach Anspruch 1, **dadurch gekennzeichnet, dass**, sobald der Leistungsspannungspegel auf dem Glättungskondensator (C_{L}) einen ersten niedrigen Leistungsspannungsschwellenwert unterschreitet, die Signalübertragungsempfangseinheit (35) deaktiviert wird.

9. Messverfahren nach Anspruch 8, **dadurch gekennzeichnet, dass** bevor der Leistungsspannungspegel auf dem Glättungskondensator (C_{L}) einen zweiten Leistungsspannungsschwellenwert, der niedriger als der erste untere Schwellenwert ist, unterschreitet, verschiedene Berechnungen der Geschwindigkeit und/oder der zurückgelegten Entfernung des Fahrrads (10) in einem nichtflüchtigen Speicher (37) in den Messschaltungen (3, 3') gespeichert werden.

10. Messverfahren nach einem der Ansprüche 1 und 2, **dadurch gekennzeichnet, dass** die Bodentemperatur durch einen Temperatursensor in jeder Messschaltung (3, 3') gemessen wird und dass die Temperaturmessung an die tragbare Vorrichtung (4) übertragen wird.

11. Messverfahren nach einem der Ansprüche 1 und 2, **dadurch gekennzeichnet, dass** die Winkelbeschleunigung durch einen Beschleunigungsmesser in jeder Messschaltung (3, 3') gemessen wird, und dass die Winkelbeschleunigungsmessung an die tragbare Vorrichtung (4) übertragen wird.

12. Messverfahren nach Anspruch 1, **dadurch gekennzeichnet, dass** der Durchmesser des Rads (11) des Fahrrads (10) und der Befestigungswinkel jeder Messschaltung (3, 3') zunächst durch die Übertragung von Parametrisierungssignalen (S_{RF}) von der tragbaren Vorrichtung (4) an die Messschaltung (3, 3') kalibriert werden.

13. Messverfahren nach Anspruch 2, **dadurch gekennzeichnet, dass** der Durchmesser des Rads (11) des Fahrrads (10) und der Befestigungswinkel jeder Messschaltung (3, 3') von der tragbaren Vorrichtung (4) basierend auf Rohdaten, die von jeder Messschaltung (3, 3') übertragen werden, und auf absoluten Messwerten oder über eine kalibrierte Strecke kalibriert werden.

14. Messverfahren nach einem der Ansprüche 1 und 2, **dadurch gekennzeichnet, dass** jede Messschaltung (3, 3') mit der tragbaren Vorrichtung (4) mithilfe von BLE-Typ-Hochfrequenzsignalen (S_{RF}) in einem Werbemodus von der Übertragungsempfangseinheit (35) kommuniziert.

15. Fahrrad, das ein System (1) zum Messen einer Geschwindigkeit und/oder einer von dem Fahrrad (10) zurückgelegten Entfernung umfasst, wobei das Messsystem zur Verwendung des Messverfahrens nach einem der vorhergehenden Ansprüche geeignet ist, wobei das Messsystem mindestens zwei Messschaltungen (3, 3') umfasst, wobei jede Messschaltung (3, 3') einen Magnetsensor (31) umfasst, wobei die Messschaltungen (3, 3') an der gleichen Stelle des Rads oder der Felge angeordnet sind, wobei die beiden Messschaltungen um 180° voneinander versetzt sind, und durch einen Permanentmagneten (2), der an dem Rahmenteil (13) oder der Gabel (12) in der gleichen Entfernung von der Drehachse des Rads (11) wie die Messschaltungen (3, 3') so angeordnet ist, dass er jeder Messschaltung (3, 3') zugewandt ist, die, wenn das Rad (11) sich dreht, an ihm vorbeiläuft, und durch eine tragbare Vorrichtung (4), die so angeordnet ist, dass sie Funkfrequenzsignale mit jeder Messschaltung (3, 3') drahtlos kommuniziert,
**dadurch gekennzeichnet, dass** jede Messschaltung (3, 3') Folgendes umfasst:
- den Magnetsensor (31) zur Erfassung seines sich drehenden Durchlaufs vor dem Permanentmagneten (2) und zur Erzeugung einer induzierten Stoßspannung bei jedem Durchlauf vor dem Permanentmagneten (2),
- einen Gleichrichter (32) zum Gleichrichten der von dem Magnetsensor (31) erzeugten Spannung und einen Glättungskondensator (C_{L}) zum Speichern der gleichgerichteten Spannung zum Speisen der Messschaltung (3, 3'),
- eine Recheneinheit (34), die von einem horologischen Quarzoszillator (33) bemessen wird, die so angeordnet ist, dass sie eine Geschwindigkeit und/oder eine zurückgelegte Entfernung für das Fahrrad (10) basierend auf der induzierten Stoßspannung berechnet, die von dem Magnetsensor (31) empfangen wird, durch die Kenntnis des Werts des Durchmessers des Rads (11) des Fahrrads (10), oder dass sie die Durchlaufzeiten des Magnetsensors (31), der dem Permanentmagneten (2) zugewandt ist, basierend auf der induzierten Stoßspannung, die von dem Magnetsensor (31) bereitgestellt werden, bestimmt, und
- eine Übertragungsempfangseinheit (35), die mit einer Antenne (36) verbunden ist, die so angeordnet ist, dass sie eine oder mehrere Geschwindigkeits- und/oder Entfernungsmessung(en), die in der Recheneinheit (34) berechnet werden, an eine tragbare Vorrichtung (4), die von dem Benutzer oder einem Teil des Fahrrads (10) getragen wird, überträgt oder dass sie Daten an eine tragbare Vorrichtung (4) überträgt, die sich auf die Durchlaufzeiten des Magnetsensors (31), der dem Permanentmagnet (2) zugewandt ist, beziehen, um in einer Verarbeitungseinheit (44) in der tragbaren Vorrichtung (4) eine Geschwindigkeit und/oder eine zurückgelegte Entfernung für das Fahrrad (10) zu berechnen, und
dadurch, dass die Geschwindigkeits- und/oder zurückgelegten Entfernungsmessungen, die durch Integration in die Recheneinheit (34) erhalten werden, in jeder Messschaltung (3, 3') oder in der Verarbeitungseinheit (44) in der tragbaren Vorrichtung (4), in einem nichtflüchtigen Speicher (37) in dem Messschaltkreis (3, 3') oder in einem nichtflüchtigen Speicher (47) in der tragbaren Vorrichtung (4) gespeichert sind.

16. Fahrrad (10) nach Anspruch 15, wobei jede Messschaltung (3, 3') auf einer Speiche (21) oder einer Felge oder einem Reifen eines Vorderrads (11) des Fahrrads (10) platziert ist, und der Permanentmagnet (2) an der Vordergabel (12) des Fahrrads platziert ist, **dadurch gekennzeichnet, dass** die tragbare Vorrichtung (4) ein Mobiltelefon oder ein elektronisches Tablet ist, das von dem Benutzer getragen oder an der Lenkstange des Fahrrads befestigt werden soll, und dadurch, dass eine oder mehrere der in jeder Messschaltung (3) aufgenommenen Messung(en) durch BLE-Typ-Hochfrequenzsignale (S_{RF}) an die tragbare Vorrichtung übertragen werden, um auf einem Anzeigeelement (48) angezeigt oder durch ein Audiosignal von einem Audioelement (48') an einen Benutzer des Fahrrads signalisiert zu werden.

17. Fahrrad (10) nach Anspruch 15, **dadurch gekennzeichnet, dass** jede Messschaltung (3, 3') einen Temperatursensor zum Messen der Bodentemperatur umfasst, die an die tragbare Vorrichtung (4) zu übertragen ist.

18. Fahrrad (10) nach Anspruch 15, **dadurch gekennzeichnet, dass** jede Messschaltung (3, 3') einen Beschleunigungsmesser für eine Winkelbeschleunigungsmessung umfasst, die an die tragbare Vorrichtung (4) zu übertragen ist.

## Claims

1. A method for measuring at least one velocity of and/or one distance travelled by a bicycle (10) when used by a user, by means of at least two measuring circuits (3, 3'), each measuring circuit comprising a magnetic sensor (31), the two measuring circuits (3, 3') being arranged on the same side of the wheel or of the rim and offset from each other by 180°, and by means of a permanent magnet (2) arranged on the part of the frame (13) or the fork (12) at the same distance from the axis of rotation of the wheel (11) as each measuring circuit (3, 3') so as to be facing each measuring circuit (3, 3') as it passes when the wheel (11) is rotating,
the method comprising the following steps:
- setting the bicycle (10) in motion on a path with the wheel (11) rotating with the measuring circuits (3, 3'),
- detecting the passage of the magnetic sensor (31) on each measuring circuit (3, 3') facing the permanent magnet (2) and generating an induced voltage impulse at each passage of the rotating measuring circuit (3, 3'),
- rectifying the voltage generated by the magnetic sensor (31) by means of a rectifier (32) and storing the rectified voltage on a smoothing capacitor (C_{L}) to power the measuring circuit (3, 3'),
- calculating a velocity and/or a distance travelled for the bicycle (10) in a computing unit (34), which is rated by a horological quartz oscillator (33) on each measuring circuit (3, 3'), on the basis of the induced voltage impulses received over time from the magnetic sensor (31), by knowing the value for the diameter of the wheel (11) of the bicycle (10), in that the velocity and/or the travelled distance measurements obtained by integration in the computing unit (34) in the measuring circuits (3, 3') are stored in a non-volatile memory (37) in each measuring circuit (3, 3'), and
- wirelessly transmitting one or more measurement(s) of the velocity and/or of the distance calculated in the computing unit (34) in each measuring circuit (3, 3') to a portable device (4) carried by the user or on a part of the bicycle (10) via a signal transmission-reception unit (35) linked to an antenna (36) on the measuring circuit (3, 3').

2. A method for measuring at least one velocity of and/or one distance travelled by a bicycle (10) when used by a user, by means of at least two measuring circuits (3, 3'), each measuring circuit comprising a magnetic sensor (31), the two measuring circuits being arranged on the same side of the wheel or of the rim, the two measuring circuits being offset from each other by 180°, and by means of a permanent magnet (2) arranged on the part of the frame (13) or the fork (12) at the same distance from the axis of rotation of the wheel (11) as the measuring circuits (3, 3') so as to be facing each measuring circuit (3, 3') as it passes when the wheel (11) is rotating,
the method comprising the following steps:
- setting the bicycle (10) in motion on a path with the wheel (11) rotating with the measuring circuits (3, 3'),
- detecting the passage of the magnetic sensor (31) on each measuring circuit (3, 3') facing the permanent magnet (2) and generating an induced voltage impulse at each passage of the rotating measuring circuits (3, 3'),
- rectifying the voltage generated by the magnetic sensor (31) by means of a rectifier (32) and storing the rectified voltage on a smoothing capacitor (C_{L}) to power the measuring circuits (3, 3'),
- determining the passage times of the measuring circuits (3) with magnetic sensors (31) facing the permanent magnet (2) in a computing unit (34), which is rated by a horological quartz oscillator (33) on each measuring circuit (3, 3'), on the basis of the induced voltage impulses provided by the magnetic sensor (31),and
- wirelessly transmitting data relating to the passage times of the magnetic sensor (31) facing the permanent magnet (2) to a portable device (4) carried by the user or on a part of the bicycle (10) via a signal transmission-reception unit (35) linked to an antenna (36) on the measuring circuits (3, 3') so as to calculate, in a processing unit (44) in the portable device (4), a physical parameter, such as a velocity and/or a distance travelled for the bicycle (10), and in that the velocity and/or the travelled distance measurements obtained by integration in the processing unit (44) in the portable device (4) are stored in a non-volatile memory (47) in each portable device (4).

3. The measuring method according to any of claims 1 and 2, **characterised in that** a distance travelled by the bicycle (10) over a determined period of time is calculated by integration into the computing unit (34) in each measuring circuit (3, 3') or into the processing unit (44) in the portable device (4), based on the induced voltage impulses received over time from the magnetic sensor (31), and **in that** the portable device (4) is arranged to display an instantaneous velocity measurement or velocity and/or travelled distance measurements on a display element (48) on the portable device (4), or to signal these measurements to the user by an audio signal via an audio element (48') on the portable device (4).

4. The measuring method according to claim 3, **characterised in that** one or more travelled distance measurement(s) are wirelessly transmitted to the portable device (4) at the same time as the velocity measurement(s) or separately.

5. The measuring method according to claim 1, **characterised in that** as soon as a velocity measurement is determined in the computing unit (34), this measurement is directly transmitted to the portable device (4) to display this instantaneous velocity measurement on a display element (48) on the portable device (4), or to signal this measurement to the user by an audio signal via an audio element (48') on the portable device (4).

6. The measuring method according to claim 1, **characterised in that** a maximum velocity value or an average velocity value is determined in the computing unit (34) over a determined period of time and transmitted to the portable device (4) to display this maximum or average velocity value on a display element (48) on the portable device (4) or to signal this measurement to the user by an audio signal via an audio element (48') on the portable device (4).

7. The measuring method according to claim 2, **characterised in that** a maximum velocity value or an average velocity value is determined in the processing unit (44) in the portable device (4) over a determined period of time to display this maximum or average velocity value on a display element (48) on the portable device (4) or to signal this measurement to the user by an audio signal via an audio element (48') on the portable device (4).

8. The measuring method according to claim 1, **characterised in that** as soon as the power voltage level on the smoothing capacitor (C_{L}) goes below a first low power voltage threshold, the signal transmission-reception unit (35) is deactivated.

9. The measuring method according to claim 8, **characterised in that** before the power voltage level on the smoothing capacitor (C_{L}) goes below a second power voltage threshold lower than the first low threshold, various calculations of the velocity of and/or distance travelled by the bicycle (10) are stored in a non-volatile memory (37) in the measuring circuit (3, 3').

10. The measuring method according any of claims 1 and 2, **characterised in that** the temperature of the ground is measured by a temperature sensor in each measuring circuit (3, 3'), and **in that** the temperature measurement is transmitted to the portable device (4).

11. The measuring method according any of claims 1 and 2, **characterised in that** angular acceleration is measured by an accelerometer in each measuring circuit (3, 3'), and **in that** the angular acceleration measurement is transmitted to the portable device (4).

12. The measuring method according to claim 1, **characterised in that** the diameter of the wheel (11) of the bicycle (10) and the fixing angle of each measuring circuit (3, 3') are initially calibrated via transmission of parameterisation signals (S_{RF}) from the portable device (4) to the measuring circuit (3, 3').

13. The measuring method according to claim 2, **characterised in that** the diameter of the wheel (11) of the bicycle (10) and the fixing angle of each measuring circuit (3, 3') are calibrated by the portable device (4) based on raw data transmitted by each measuring circuit (3, 3') and on absolute measured values or over a calibrated course.

14. The measuring method according to any of claims 1 and 2, **characterised in that** each measuring circuit (3, 3') communicates with the portable device (4) via BLE-type radiofrequency signals (S_{RF}) in an advertising mode from the transmission-reception unit (35).

15. A bicycle comprising a system (1) for measuring a velocity of and/or a distance travelled by said bicycle (10), the measuring system being suitable for using the measuring method according to any of the preceding claims, the measuring system comprising at least two measuring circuits (3, 3'), each measuring circuit (3, 3') comprising a magnetic sensor (31), the measuring circuits (3, 3') being arranged on the same side of the wheel or of the rim, the two measuring circuits being offset from one another by 180°, and by means of a permanent magnet (2) arranged on the frame part (13) or the fork (12) at the same distance from the axis of rotation of the wheel (11) as the measuring circuits (3, 3') so as be facing each measuring circuit (3, 3') as it passes when the wheel (11) is rotating, and a portable device (4) arranged to wirelessly communicate radiofrequency signals with each measuring circuit (3, 3'),
**characterised in that** each measuring circuit (3, 3') comprises:
- the magnetic sensor (31) for detecting its rotational passage in front of the permanent magnet (2) and for generating an induced voltage impulse at each passage in front of the permanent magnet (2),
- a rectifier (32) for rectifying the voltage generated by the magnetic sensor (31) and a smoothing capacitor (C_{L}) for storing the rectified voltage to power the measuring circuit (3, 3'),
- a computing unit (34) that is rated by a horological quartz oscillator (33), being arranged to calculate a velocity and/or a distance travelled for the bicycle (10) based on the induced voltage impulses received from the magnetic sensor (31) by knowing the value of the diameter of the wheel (11) of the bicycle (10) or to determine the passage times of the magnetic sensor (31) facing the permanent magnet (2) based on the induced voltage impulses provided by the magnetic sensor (31), and
- a transmission-reception unit (35) linked to an antenna (36) arranged to transmit one or more velocity and/or distance measurement(s) calculated in the computing unit (34) to a portable device (4) carried by the user or on a part of the bicycle (10) or to transmit data relating to the passage times of the magnetic sensor (31) facing the permanent magnet (2) to the portable device (4) so as to calculate, in a processing unit (44) in the portable device (4), a velocity and/or a distance travelled for the bicycle (10), and
**in that** the velocity and/or travelled distance measurements obtained by integration into the computing unit (34) are stored in each measuring circuit (3, 3') or in the processing unit (44) in the portable device (4), in a non-volatile memory (37) in the measuring circuit (3, 3') or in a non-volatile memory (47) in the portable device (4).

16. The bicycle (10) according to claim 15, in which each measuring circuit (3, 3') is placed on a spoke (21) or a rim or a tyre of a front wheel (11) of the bicycle (10), and the permanent magnet (2) is placed on the front fork (12) of the bicycle, **characterised in that** the portable device (4) is a mobile phone or an electronic tablet to be carried by the user or fastened to the handlebar of the bicycle, and **in that** one or more of the measurement(s) taken in each measuring circuit (3) are transmitted by BLE-type radiofrequency signals (S_{RF}) to the portable device to be displayed on an display element (48) or signalled by an audio signal from an audio element (48') to a user of the bicycle.

17. The bicycle (10) according to claim 15, **characterised in that** each measuring circuit (3, 3') comprises a temperature sensor to measure the temperature of the ground to be transmitted to the portable device (4).

18. The bicycle (10) according to claim 15, **characterised in that** each measuring circuit (3, 3') comprises an accelerometer for an angular acceleration measurement to be transmitted to the portable device (4).
